(19) **Europäisches Patentamt / European Patent Office / Office européen des brevets**

(11) **EP 4 603 454 A1**

(12) **EUROPEAN PATENT APPLICATION**
published in accordance with Art. 153(4) EPC

(43) Date of publication:
**20.08.2025 Bulletin 2025/34**

(21) Application number: **24865335.4**

(22) Date of filing: **04.09.2024**

(51) International Patent Classification (IPC):
***C01B 33/18*** (2006.01)

(52) Cooperative Patent Classification (CPC):
**C01B 33/18**

(86) International application number:
**PCT/JP2024/031711**

(87) International publication number:
**WO 2025/057834 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.09.2023 JP 2023146999**

(71) Applicant: **TOKUYAMA CORPORATION Yamaguchi 745-8648 (JP)**

(72) Inventor: **YOSHIMURA, Noriko Shunan-shi, Yamaguchi 745-8648 (JP)**

(74) Representative: **Viering, Jentschura & Partner mbB Patent- und Rechtsanwälte Am Brauhaus 8 01099 Dresden (DE)**

(54) **POROUS SPHERICAL SILICA AND METHOD FOR PRODUCING SAME**

(57) Provided are: a porous spherical silica having a large modal pore diameter and a large pore volume, and having a sharp pore diameter distribution; and a production method thereof. The porous spherical silica has a pore volume by a mercury penetration method of 0.5 mL/g to 8 mL/g, a modal pore diameter by a mercury penetration method of 5 nm to 50 nm, and a proportion of the volume of the pores each having a pore diameter in the range of the modal pore diameter $\pm 5$ nm to the total pore volume of at least 40%; and can be produced by forming, into spheres by an emulsion method, a fumed silica-dispersed solution where fumed silica is dispersed so that the particle size distribution is within a predetermined range, and thereafter, turning the resultant into gels.

EP 4 603 454 A1

## Description

[Technical Field]

The present invention relates to a novel porous spherical silica, and a production method thereof.

[Background Art]

Porous silica has been researched in a variety of ways, and porous silicas having a variety of physical properties have been proposed. Utilizing properties thereof, porous silicas are used for a wide variety of applications including carriers for catalysts or perfumes, adsorbents, additives for cosmetics, polishes for industrial products and the like, and column fillers for liquid chromatography. A porous silica having a sharp pore diameter distribution is useful particularly for the application to catalyst carriers, or column fillers for liquid chromatography. A porous silica with the foregoing property is produced, for example, by a wet process using alkoxysilane as a raw material (patent literature 1 or 2), or by a method of spray-drying a spherical silica fine particle dispersed-solution (patent literature 3). When the foregoing porous silica is used as a column filler or a catalyst carrier, the modal pore diameter is adjusted according to a target solute to be separated, or a catalytic material to be carried whereby the separation power of the column becomes good, or the catalytic material can be selectively carried. Particularly, a porous silica having a large modal pore diameter is preferable when a large solute to be separated or a large catalyst carrier is treated; and when such a porous silica further has a large pore volume, the separation efficiency in the column, or the carried volume of the catalyst is improved. A porous silica having a large modal pore diameter and a large pore volume can be produced, for example, by a method of gelating a fumed silica-dispersed solution in a solution (patent literature 4).

[Citation List]

[Patent Literature]

[0003]

　　　Patent Literature 1: JP 2007-76941 A
　　　Patent Literature 2: JP 2008-120633 A
　　　Patent Literature 3: JP 2010-138021 A
　　　Patent Literature 4: WO 2022/154014 A1

[Summary of Invention]

[Technical Problem]

However, it is difficult to have both a large modal pore diameter and a large pore volume while having a sharp pore diameter distribution. The porous spherical silicas disclosed in patent literatures 1 to 3 all have sharp pore diameter distributions, whereas the porous spherical silicas disclosed in patent literatures 1 and 2 have small modal pore diameters and the porous spherical silica disclosed in patent literature 3 has a small pore volume, which is problematic. The porous spherical silica disclosed in patent literature 4 has a large modal pore diameter and a large pore volume, whereas having a broad pore diameter distribution, which is not appropriate to the application to a column filler or a catalyst carrier.

Therefore, an object of the present invention is to provide: a porous spherical silica having a large modal pore diameter and a large pore volume, and having a sharp pore diameter distribution; and a production method thereof.

[Solution to Problem]

As a result of their intensive research for solving the aforementioned problems, the inventor of the present invention found out that a porous spherical silica having a large modal pore diameter and a large pore volume, and having a sharp pore diameter distribution can be produced by, in the step of producing the porous spherical silica, forming, into spheres by an emulsion method, a fumed silica-dispersed solution where a fumed silica is dispersed so that the particle size distribution is within a predetermined range, and thereafter, turning the resultant into gels; and reached the completion of the following present invention.

　　[1] A porous spherical silica, wherein

a pore volume by a mercury penetration method is 0.5 mL/g to 8 mL/g,
a modal pore diameter by a mercury penetration method is 5 nm to 50 nm, and
a proportion of a volume of pores each having a pore diameter in a range of the modal pore diameter ±5 nm to a total pore volume is at least 40%.

[2] The porous spherical silica according to [1], wherein
the volume of the pores each having a pore diameter in the range of the modal pore diameter by a mercury penetration method ±5 nm is at least 0.5 mL/g.
[3] The porous spherical silica according to [1] or [2], wherein

a volume based 50% cumulative diameter (D50) of the porous spherical silica measured by a Coulter counter method is in a range of 2 and 200 $\mu$m, and
a ratio (D10/D90) of a volume based 10% cumulative diameter (D10) of the porous spherical silica measured by a Coulter counter method to a volume based 90% cumulative diameter (D90) of the porous spherical silica measured by a Coulter counter method is at least 0.3.

[4] The porous spherical silica according to any one of [1] to [3], wherein
a specific surface area of the porous spherical silica by a BET method is 100 m$^2$/g to 400 m$^2$/g.
[5] The porous spherical silica according to any one of [1] to [4], wherein
an alkali metal content is at most 50 ppm.
[6] A catalyst carrier comprising:
the porous spherical silica according to any one of [1] to [5].
[7] A column filler comprising:
the porous spherical silica according to any one of [1] to [5].
[8] A cosmetic comprising:
the porous spherical silica according to any one of [1] to [5].
[9] A polish comprising:
the porous spherical silica according to any one of [1] to [5].
[10] A resin composition comprising:
the porous spherical silica according to any one of [1] to [5].
[11] An adsorbent comprising:
the porous spherical silica according to any one of [1] to [5].
[12] A method of producing the porous spherical silica according to any one of [1] to [5], the method comprising:

preparing a fumed silica-dispersed solution so that a value of D50 is at most 0.15 $\mu$m, and a value of D90 is at most 0.2 $\mu$m, the D50 and the D90 being in a particle size distribution of the fumed silica-dispersed solution;
preparing a W/O emulsion comprising an aqueous phase where a fumed silica is dispersed, and an organic phase including a nonaqueous solvent as a major component;
heating the emulsion and gelating the aqueous phase to obtain a gel-dispersed solution; and
collecting, from the solution, and drying generated gels.

[Advantageous Effects of Invention]

Because the porous spherical silica according to the present invention has a sharp pore diameter distribution, a specific target solute can be efficiently separated when this silica is used as a column filler. Further, because this silica has a large pore volume, the carried volume of the catalyst can be increased when this silica is used as a catalyst carrier; and high oil absorption performance can be given when this silica is used as an additive for cosmetics. In addition, because having a large pore diameter as shown by the large modal pore diameter thereof, this silica can be preferably used particularly as a column filler intended for large solutes to be separated, or a carrier for the purpose of carrying a large catalyst component. In addition, when this silica is used as a polish for industrial products and the like, resin easily permeates into the insides of the pores, which makes fixing to the resin on a polishing pad easy.
In the production method according to the present invention, the porous spherical silica is produced by: preparing a fumed silica-dispersed solution so that the particle size distribution is in a predetermined range; and thereafter turning this solution into gels. By taking the step of turning into gels as described above, the adjusted particle size distribution can be reflected on the structure of the pores. Thus, the porous spherical silica having a sharp pore diameter distribution can be easily obtained. In addition, by using a fumed silica as the raw material, decrease in pore volume due to drying shrinkage is suppressed because the fumed silica itself has a structure, and it becomes possible to obtain the porous spherical silica having a large modal pore diameter and a large pore volume without any surface treatment.

[Description of Embodiments]

The following embodiments are examples of the present invention. The present invention is not limited to these embodiments.

<Porous Spherical Silica>

(Pore Volume)

The porous spherical silica according to the present invention has a pore volume measured by a mercury penetration method of 0.5 mL/g to 8 mL/g. It is difficult to obtain a porous spherical silica having a large pore volume exceeding 8 mL/g. It is easier to produce a porous spherical silica having a pore volume of at most 6 mL/g, is much easier to produce a porous spherical silica having a pore volume of at most 4 mL/g, and is particularly easier to produce a porous spherical silica having a pore volume of at most 2.5 mL/g. In particular, in order for the porous spherical silica according to the present invention to have a large carried volume when this silica is used as a catalyst carrier, the pore volume is preferably at least 0.6 mL/g, further preferably at least 0.7 mL/g, and more preferably at least 1.0 mL/g. As long as having a pore volume within the aforementioned range, the porous spherical silica according to the present invention can have a high oil absorption value even when used as an additive for cosmetics.

(Modal Pore Diameter)

Further, the modal pore diameter measured by a mercury penetration method is at least 5 nm, preferably at least 10 nm, and more preferably at least 15 nm; and the upper limit thereof is at most 50 nm, and preferably at most 30 nm. When a porous spherical silica having a modal pore diameter of less than 5 nm is used as a column filler, more pores are not used for separation, and the separation efficiency worsens. When the modal pore diameter is more than 50 nm, the particle strength is reduced, which makes the use as a column filler difficult. As long as having a modal pore diameter within the aforementioned range, this silica shows a good separation power when used as a column filler, and also good handleability. When the porous spherical silica having a modal pore diameter within the aforementioned range is used as a polish for industrial products and the like, resin easily permeates into the insides of the pores, which makes fixing to the resin on a polishing pad easy.

(Proportion of Volume of Pores each Having Pore Diameter in Range of Modal Pore Diameter $\pm 5$ nm to Total Pore Volume)

The proportion of, to the total pore volume, the volume of the pores of the porous spherical silica according to the present invention each having a pore diameter in the range of the modal pore diameter $\pm 5$ nm (hereinafter may be simply referred to as the "pore volume proportion") is at least 40%. The pore volume proportion below the aforementioned range causes the carried volume of a catalytic material to decrease, or the separation power of a column filler to deteriorate. The pore volume proportion is more preferably at least 45%, and further preferably at least 50%. The porous spherical silica having a pore volume proportion of the aforementioned range has a sharp pore diameter distribution, that is, has uniform and consistent pore diameters. Therefore, by selecting a porous spherical silica having a modal pore diameter according to the size of a catalytic material, the catalytic material can be carried efficiently when the selected silica is used as a catalyst carrier. When used as a column filler, this silica shows a good separation power because a specific material can be separated accurately. A preferred range of the pore volume proportion has no upper limit. However, the upper limit of the pore volume proportion is determined by the silica concentration of a fumed silica-dispersed solution used as the raw material. It is technically difficult to obtain a porous spherical silica having a pore volume proportion more than 90%.

(Circularity)

The porous spherical silica according to the present invention has a spherical shape. Here, the spherical shape means that the average circularity obtained by image analysis using a Scanning Electron Microscope (SEM) is at least 0.8. The "average circularity obtained by image analysis" is the arithmetic mean value of the circularities obtained by subjecting, to image analysis, a SEM image of at least 2000 particles of the porous spherical silica which is observed with a SEM at the magnification of 1000. Here, the "circularity" is the value calculated by the following equation (1):

$$(1): C = 4\pi S/L^2$$

In the equation (1), C means the circularity, S means the area of the porous spherical silica in the image (project area), and L means the length of the circumference (perimeter) of the porous spherical silica in the image. The average circularity is particularly preferably at least 0.85.

The porous spherical silica according to the present invention has the aforementioned properties, and therefore, can give a smooth touch when used as an additive for cosmetics.

(Volume of Pores each Having Pore Diameter in Range of Modal Pore Diameter ±5 nm)

The aforementioned volume of the pores each having a pore diameter in the range of the modal pore diameter ±5 nm is preferably at least 0.5 mL/g, more preferably at least 0.6 mL/g, and further preferably at least 0.65 mL/g. The volume of the pores each having a pore diameter in the range of the modal pore diameter ±5 nm of at least the aforementioned volume means that the volume of the pores each having a specific pore diameter is high. Particularly, by selecting a porous spherical silica having a modal pore diameter according to the size of a catalytic material, the catalytic material can be carried efficiently when the selected silica is used as a catalyst carrier. A preferred range of the volume of the pores each having a pore diameter in the range of the modal pore diameter ±5 nm has no upper limit. However, it is technically difficult to obtain a porous spherical silica having a volume as described of more than 0.9 mL/g.

These pore diameter and pore volume are the values measured by a mercury penetration method after a pretreatment by constant temperature drying at 120°C for 4 hours. The pore diameter is calculated using the equation (2) of Washburn's equation:

$$(2): PD = -4\sigma\cos\theta$$

where P is the pressure [psia/absolute pressure], $\sigma$ is the surface tension of mercury, D is the pore diameter [$\mu$m], and $\theta$ is the contact angle with mercury. The surface tension of mercury is 480 dynes/cm, and the contact angle with mercury is set to 140 degrees. The measurement is carried out for pore diameters of 0.0036 to 200 $\mu$m. Regarding pore diameters larger than 100 nm as voids among the particles, the volume of pores having pore diameters of at most 100 nm is calculated. Further, the integrated value of the volume of the pores having pore diameters of at most 100 nm that is obtained in the same process is differentiated, and the pore diameter at the main peak is defined as a modal pore diameter.

(Particle Size Distribution)

The porous spherical silica according to the present invention preferably has a 50% cumulative diameter (D50) of the volume-based particle size distribution measured by a Coulter counter method in the range of 2 and 200 $\mu$m, and preferably has a ratio of the 10% cumulative diameter (D10) of this distribution to the 90% cumulative diameter (D90) of this distribution (D10/D90) of at least 0.3. When the particle size distributions of this porous spherical silica are in the foregoing ranges, blockage to an analytical column is less likely to occur, and filling becomes easy when this porous spherical silica is used as a filler for the column. The D50 is preferably 2 to 100 $\mu$m, particularly preferably 5 to 50 $\mu$m, and further preferably 5 to 20 $\mu$m. The D10/D90 is preferably at least 0.4, and further preferably at least 0.5. The D10/D90 cannot exceed 1.0, and generally, is at most 0.6.

(Specific Surface Area by BET Method)

The porous spherical silica according to the present invention preferably has a specific surface area by the BET method of 100 m$^2$/g to 400 m$^2$/g. This specific surface area is preferably at least 150 m$^2$/g, and particularly preferably within the range of 200 m$^2$/g and 350 m$^2$/g. The specific surface area of the porous spherical silica obtained by the production method according to the present invention is the value obtained by subtracting several ten square meters per gram from the specific surface area of a fumed silica used as the raw material. When a fumed silica to be used as the raw material is selected so that the specific surface area of a porous spherical silica to be obtained is in the aforementioned range, turning into gels becomes easy, and spherical formation becomes easy. Because the specific surface area of fumed silica is generally at most 400 m$^2$/g, it is difficult to obtain a porous spherical silica having a specific surface area exceeding 400 m$^2$/g. Here, the specific surface area is a value by a BET multipoint method using nitrogen adsorption. When this silica is used as a carrier for catalysts or perfumes, or an adsorbent, the specific surface area within the aforementioned range can lead to an increased contact area with a reactant, and contributes to an improvement in reaction efficiency.

(Alkali Metal Content)

The porous spherical silica according to the present invention has an alkali metal content of at most 50 ppm (on the mass basis). This alkali metal content is preferably at most 30 ppm, and more preferably at most 10 ppm. When the alkali metal content is within the aforementioned range, this silica can be preferably used as a catalyst carrier without deterioration in catalytic activity due to inclusion of impurities, and is extremely useful especially as a polish intended for materials that dislike containing alkali metals, such as semiconductors.

The porous spherical silica according to the present invention may be hydrophilic and may be hydrophobic. The porous spherical silica according to the present invention that is produced by the undermentioned production method is hydrophilic. A hydrophobic porous spherical silica can be obtained, for example, by obtaining the hydrophilic porous spherical silica by the undermentioned production method, and thereafter, appropriately using a silica surface treating method. "Hydrophilic" here means being dispersible in water containing no organic solvent.

The porous spherical silica according to the present invention has the aforementioned properties, and thus, can be used as a filler for analytical columns, a carrier for catalysts or perfumes, an adsorbent for carbon dioxide etc., an additive for cosmetics, a polish for industrial products and the like, or an additive for various resin compositions.

<Method of Producing Porous Spherical Silica>

The method of producing the porous spherical silica according to the present invention is not particularly limited. The aforementioned large pore volume and large modal pore diameter are easily realized by the use of a fumed silica-dispersed solution as the raw material. In general, fumed silica has the structure of aggregated fine particulate silica (primary particles). Therefore, by using a fumed silica-dispersed solution as the raw material of the porous spherical silica, and turning the fumed silica in the dispersed solution into gels to form a network, decrease in pore volume due to drying shrinkage is suppressed, and it becomes possible to obtain the porous spherical silica having a large modal pore diameter and a large pore volume.

In addition, by dispersing a fumed silica so that the particle size distribution of the fumed silica-dispersed solution is within a predetermined range, and thereafter turning the resultant into gels, it becomes easy to reflect the dispersion state of the solution as a structure of the porous spherical silica, which makes it possible to obtain the porous spherical silica having a sharp pore diameter distribution.

A more specific example is the method of producing the porous spherical silica including: preparing a fumed silica-dispersed solution so that the particle size distribution is within a predetermined range (step of preparing a dispersed solution); preparing a W/O emulsion including an aqueous phase where the fumed silica is dispersed, and an organic phase including a nonaqueous solvent as a major component (step of preparing a W/O emulsion); next, heating the emulsion and gelating the aqueous phase to obtain a porous spherical silica-dispersed solution (gelating step); and thereafter, collecting, from the solution, and drying the generated porous spherical silica (step of collecting gels). Hereinafter each of the steps will be described in detail.

(Step of Preparing Dispersed Solution)

The step of preparing a dispersed solution is the step of dispersing a fumed silica in water to prepare a dispersed solution.

An example of a method of dispersing a fumed silica in water is a method of preparing a dispersed solution where a fumed silica is predispersed in water, and subjecting the prepared solution to fine dispersion with a disintegrator or the like. Specific examples of a disintegrator that can be used for the fine dispersion include a ball mill, a bead mill, a vibration mill, a pin mill, an atomizer, Nanomizer (trade name), Altimizer, a colloid mill, a homogenizer, a high pressure homogenizer, and an ultrasonic homogenizer.

The operating conditions of the disintegrator or the like in the fine dispersion are preferably adjusted according to the device so that the fumed silica-dispersed solution is in a predetermined dispersion state. The dispersion state of the fumed silica-dispersed solution can be confirmed by evaluating the values of D50 and D90 of the particle size distribution measured by a laser diffraction scattering method. The value of D50 is preferably at most 0.15 μm, more preferably at most 0.13 μm, and particularly preferably at most 0.12 μm. The value of D90 is preferably at most 0.20 μm, more preferably at most 0.18 μm, and particularly preferably at most 0.17 μm. Preferably, both the D50 and D90 are within the aforementioned ranges.

When the values of D50 and D90 are within the aforementioned ranges, the porous spherical silica of a sharp pore diameter distribution can be obtained. The values of D50 and D90 have no lower limit. However, it is difficult to obtain a fumed silica-dispersed solution having a value of D50 of at most 0.05 μm.

For the measurement of the particle size distribution of the dispersed solution, LS 13 320 (manufactured by Beckman Coulter) is used. The refractive index of water which is used as a solvent in the measurement is set to 1.333, and the refractive index of the particle is set to 1.46. From the obtained particle size distribution, the volume-based 50% and 90% cumulative diameters are evaluated.

Any fumed silica that is dispersible in water, and can turn into gels by heating, adjusting pH, or the like can be used. Such properties are realized when there are a large number of silanol groups on the silica surface. Thus, most of fumed silicas can be used unless the fumed silicas are subjected to what is called surface treatment. In view of easy progress in gelating, a fumed silica having a specific surface area of at least 100 $m^2$/g, particularly at least 200 $m^2$/g is preferably used. This specific surface area is further preferably at least 250 $m^2$/g. The larger the specific surface area is, the faster the speed of progress in gelating is, and the easier it is to gelate droplets (W-phase) where the fumed silica is dispersed. In view of availability, the upper limit of the specific surface area of a fumed silica to be used is preferably 400 $m^2$/g.

The specific surface area of the porous spherical silica obtained by the method described here is the value obtained by subtracting several ten square meters per gram from the specific surface area of the fumed silica used as the raw material. Thus, by appropriately selecting a fumed silica to be used as the raw material according to the specific surface area of the target porous spherical silica, the specific surface area of the porous spherical silica can be controlled freely without any change in producing conditions. Fumed silicas having different specific surface areas can be used in combination in the present invention.

Fumed silicas as described above are commercially available. For example, the following can be used: various hydrophilic grades of REOLOSIL from Tokuyama Corporation, various hydrophilic grades of AEROSIL from NIPPON AEROSIL CO., LTD., and various hydrophilic grades of dry silica HDK from Wacker Asahikasei Silicone Co., Ltd.

In general, fumed silica is of high purity, and contains almost no impurities such as alkali metals. Thus, the alkali metal content of the produced porous spherical silica can be extremely low.

Water is essential as a solvent in this step, whereas any other solvent may be contained as long as not hindering the formation of the emulsion, or the subsequent gelating. When a latent base is used for promoting the undermentioned gelating, it is preferable to dissolve the latent base in water before the fumed silica is dispersed.

The silica concentration of the fumed silica-dispersed solution is preferably in the range of 10 mass% and 30 mass%, more preferably at least 15 mass%, and particularly preferably at least 20 mass%. The higher the silica concentration of the fumed silica-dispersed solution is, the faster the speed of progress in gelating is. Too high a silica concentration however leads to loss of fluidity, which makes it difficult to form a fumed silica-dispersed solution.

The gelation of the fumed silica-dispersed solution is accelerated by heating. Progress in gelation of the fumed silica-dispersed solution at the stage of the step of preparing a dispersed solution causes the W-phase to be difficult to form spheres in the subsequent step of preparing a W/O emulsion, and in an extreme case, makes it difficult to form the emulsion itself. Therefore, in the step of preparing a dispersed solution, the temperature of the fumed silica-dispersed solution is preferably kept at approximately room temperature (20°C) or lower. It is also effective to cool the fumed silica-dispersed solution to a temperature lower than room temperature (preferably at most 15°C, more preferably at most 12°C) when the specific surface area of the fumed silica is large and/or the concentration thereof is high and the gelating easily progresses.

(Step of Preparing W/O Emulsion)

The step of preparing a W/O emulsion is the step of dispersing, in a nonaqueous solvent, the fumed silica-dispersed solution obtained in the step of preparing a dispersed solution, and forming the W/O emulsion. When such a W/O emulsion is formed, the fumed silica-dispersed solution, which is a dispersoid, is in the form of sphere because of surface tension etc. Thus, spherical gels can be obtained by gelating the fumed silica-dispersed solution in the form of sphere which is dispersed in the nonaqueous solvent.

Any nonaqueous solvent is used in this production method as long as being so hydrophobic that the solvent and the fumed silica-dispersed solution can form an emulsion. As such a solvent, for example, an organic solvent of any of hydrocarbons, halogenated hydrocarbons, and the like can be used. More specific examples of such a solvent include nonaqueous solvents such as hexane, heptane, octane, nonane, decane, liquid paraffin, dichloromethane, chloroform, carbon tetrachloride, and dichloropropane. Among them, hexane, heptane, and decane, which have a moderate viscosity, can be preferably used. If necessary, a plurality of solvents may be used in combination. A hydrophilic solvent such as lower alcohols can be also used in combination (used as a mixed solvent) as long as such a hydrophilic solvent and the fumed silica-dispersed solution can form an emulsion.

The amount of using the nonaqueous solvent is not particularly limited as long as the W/O emulsion can be formed. Generally, approximately 1 to 10 parts by volume of a nonaqueous solvent is used per 1 part by volume of a fumed silica-dispersed solution.

In this production method, a surfactant is preferably added when the W/O emulsion is formed. As a surfactant as used herein, any of known surfactants that are used for forming W/O emulsions can be used without limitations, and any of anionic surfactants, cationic surfactants, and nonionic surfactants can be used. Among them, nonionic surfactants are preferrable because of easy formation of the W/O emulsion, and because alkali metal contamination hardly occurs. Any surfactant having a HLB value of 3 to 5 can be particular preferably used. The HLB value here indicates the degree of hydrophilicity or hydrophobicity of a surfactant, and here, means the HLB value according to Griffin's method. Specific examples of surfactants that can be preferably used here include sorbitan monooleate, sorbitan monostearate, and sorbitan monosesquioleate.

The amount of using the surfactant is the same as a usual amount thereof when a W/O emulsion is formed. Specifically, any amount in the range of 0.05 g and 10 g can be preferably applied for 100 mL of the fumed silica-dispersed solution.

As the method of dispersing the fumed silica-dispersed solution in the nonaqueous solvent when the W/O emulsion is formed, a known method of forming a W/O emulsion can be used. In view of easy industrial production etc., emulsion formation by mechanical emulsification is preferable, and specific examples thereof include methods using a mixer, a homogenizer, and the like. Preferably, a homogenizer can be used. Through this step of forming an emulsion, an emulsion having a sharp particle size distribution of the droplets of the aqueous phase is obtained. Thus, the particle size distribution of the finally obtained spherical porous silica is also sharp.

(Gelating Step)

The gelating step follows the step of preparing a W/O emulsion, and is the step of gelating the fumed silica-dispersed solution in the state where the droplets of the fumed silica-dispersed solution are dispersed in the nonaqueous solvent. This gelating can be carried out by a known method. For example, the gelating can be easily progressed by the technique of heating to a high temperature, or the technique of adjusting the pH of the fumed silica-dispersed solution to be weakly acidic, or basic. These techniques are preferable because the reaction thereby can be actively controlled. It is noted that the pH of the fumed silica-dispersed solution prepared by the aforementioned method without pH adjustment is generally in the range of 3.0 and 4.5.

The heating should be performed so that the temperature does not exceed the boiling point of each of the used solvents. The lower limit of the gelating temperature is preferably at least 50°C, and more preferably at least 60°C; and the upper limit thereof is preferably at most 100°C, and more preferably at most 90°C.

The aforementioned pH adjustment can be easily performed by: the method of mixing a substance that thermally decomposes by heating so as to show basicity (which will be referred to as the "latent base"), such as urea, with the fumed silica-dispersed solution in advance, and heating the mixture in the gelating to raise the pH; or the method of adding a base into the W/O emulsion while maintaining the W/O emulsion forming state by stirring with a mixer or the like.

Specific examples of this base include: ammonia; tetraalkylammonium hydroxides such as tetramethylammonium hydroxide (TMAH); amines such as trimethylamine; alkali hydroxides such as sodium hydroxide; alkali metal carbonates such as sodium carbonate, and sodium hydrogen carbonate; and alkali metal silicates. The strength of the aforementioned stirring may be such that the W/O emulsion and the base are mixed.

Among the aforementioned pH adjusting methods, the method by thermal decomposition of the latent base such as urea, or the method using ammonia, a tetraalkylammonium hydroxide, or an amine as a base is preferable in view of no inclusion of metal elements. When used for the pH adjustment, ammonia may be blown in as a gas, or may be added as aqueous ammonia. It is particularly preferable to apply pH adjustment using urea because the pH can be uniformly adjusted as a whole by heating.

As a pH when the pH is adjusted to promote the gelating, it is particularly preferable to adjust the amount of the addition so that the value of the pH of the fumed silica-dispersed solution rises to approximately 4.5 to 8.0. This is also true of the case where the latent base is used. For example, when urea is used, the following are specific amounts of the addition on the basis of the fumed silica-dispersed solution: preferably at least 1 mass%, and particularly preferably at least 2 mass%; and as the upper limit, preferably at most 7 mass%, and more preferably at most 5 mass%.

In order to prevent the gels from agglomerating, stirring is preferable when the aforementioned heating or pH adjustment is performed. A known method is generally used for the stirring. For example, specifically, a mixer with stirring blades can be used.

After the gelating, since the dispersoid have changed from the form of liquid to the form of solid, the system is not a W/O emulsion but a dispersed solution (suspension) where solids (gels) are dispersed in the hydrophobic solvent.

(Step of Collecting Gels)

In this production method, the gels generated as described above are collected from the solution. As a method of collecting the gels, a general solid-liquid separating method such as filtration and centrifugation can be used. Prior to the collection, WO phase separation may be performed. WO phase separation is to separate the gel-dispersed solution into the two layers of an O-phase and a W-phase, and is the operation generally called demulsification. Here, the gels obtained in the gelating step are present on the separated W-phase side. By separating this from the O-phase, the gels can be easily collected through solid-liquid separation by filtration or the like.

As the WO phase separation method, one may appropriately select and carry out a known method as a demulsifying method. Preferably, the WO phase separation is performed by adding a certain amount of an aqueous organic solvent that is commonly used in demulsification to the gel-dispersed solution, and heating the resultant to separate the resultant into the O-phase and the W-phase. After this step, generally, the upper layer is the O-phase (layer mainly including the organic solvent), and the lower layer is the W-phase (water layer including the aqueous organic solvent and the gels).

Examples of the aqueous organic solvent include acetone, methanol, ethanol, and isopropyl alcohol. Among them, isopropyl alcohol can be particularly preferably used.

Preferably, the amount of the addition of the aqueous organic solvent is adjusted according to the type and the amount of the surfactant used when the emulsion was formed, which has a HLB of 3 to 5. For example, when sorbitan monooleate is used as the surfactant, the demulsification can be preferably performed by adding the aqueous organic solvent approximately 1/6 to 1/2 times as much as the non-aqueous organic solvent (aqueous organic solvent/non-aqueous organic solvent) by mass, stirring the resultant if necessary, and thereafter, allowing the resultant to stand.

In the WO phase separation, the surfactant moves to the O-phase side (extraction). Thus, the porous spherical silica with which no impurities from the surfactant are mixed can be obtained by removing the O-phase.

The temperature range for the heating is at least 50°C, preferably approximately 50 to 80°C, and more preferably approximately 60 to 70°C.

After the aqueous organic solvent is added to the gel-dispersed solution as described above, it is preferable to stir the resultant in order to prevent the gels from agglomerating with each other. Generally, a known method is used for the stirring. Specifically, for example, a mixer with stirring blades can be used. The extent of the mixing is not particularly limited, but may be such that rotation is caused by the stirring in the level of the dispersion, which is, for example, in the case of the stirring with a mixer, 0.1 to 3.0 kW/m$^3$, preferably 0.5 to 1.5 kW/m$^3$. As the stirring time, 0.5 to 24 hours, preferably approximately 0.5 to 1 hour is appropriate.

After the WO phase separation, the W-phase including the gels are collected. Specifically, the O-phase (upper layer) can be separated and removed by, for example, decantation.

The porous spherical silica according to the present invention can be obtained by collecting the gels included in the collected W-phase by solid-liquid separation, and drying the collected gels. As the method of collecting the gels, any known method can be used. Specific examples of this method include suction filtration and centrifugation. As the drying method, any general method can be used. For suppressing the agglomeration of the particles, it is preferable to employ a fluidized drying method, specifically, vibration-drying, flash-drying, spray-drying, or the like. The agglomeration of the particles can be also suppressed by, prior to the drying, solvent replacement of an organic solvent having a low surface tension, or a rinse of such an organic solvent for a cake after the solid-liquid separation. This organic solvent is preferably aqueous because the replacement for water remaining inside the pores becomes easy. Specific examples of an aqueous organic solvent as used herein include acetone, methanol, ethanol, and isopropyl alcohol.

In addition, the drying shrinkage inside the pores can be adjusted by the solvent replacement or rinse, and therefore, the pore volume can be controlled by moderate drying shrinkage. When the solvent replacement is performed, by lowering the concentration of the aqueous organic solvent and raising the ratio of the water, drying shrinkage easily occurs and the pore volume is smaller. On the contrary, raising the concentration of the aqueous organic solvent leads to suppressed drying shrinkage, and the pore volume tends to be larger. When the rinse is given, by reducing the amount of using the aqueous organic solvent, the pore volume becomes smaller.

The temperature in the drying is preferably at least the highest boiling point in the boiling points of all the variety of the solvents used in the steps from the preparation of the fumed silica dispersion to the drying. The drying is preferably performed under atmospheric or reduced pressure. "At least the ... boiling point" in the above description means at least the boiling point of the solvent under the pressure in the drying.

Further, the porous spherical silica according to the present invention may be fired after the drying. Organic substances can be removed, and the compressive strength can be adjusted by this firing. When the firing is performed for the purpose of removing organic substances, the firing temperature may be at least the respective boiling points of the organic substances used in the production method according to the present invention. When the firing is performed for the purpose of adjusting the compressive strength, the firing conditions may be adjusted so that the target value can be obtained. Generally, the longer the firing time is and the higher the firing temperature is, the stronger the compressive strength tends to be.

A known method can be used as the firing method. Generally, an example of such a method is the method of placing, in a crucible, a quartz vat, or the like, and heating a dried porous spherical silica with an electric furnace.

The atmosphere in the firing is not particularly limited. The firing can be performed in an inert gas such as argon and nitrogen, or in an air atmosphere.

The heating rate in the firing may be in a range such that the temperature rise in a heating device such as an electric furnace can follow the heating rate. The slower the heating rate is, the worse the processing efficiency in the firing is. Thus, the heating rate is preferably not extremely slow. When a general electric furnace is used, the temperature is preferably raised at 2 to 10°C/min.

Further, the dried porous spherical silica or the dried and fired porous spherical silica may be disintegrated. The disintegration can be carried out with a general disintegrator or the like, and specifically, processing methods using the following are known: a ball mill, a pin mill, a vibration mill, a bead mill, a jet mill, Masscolloider (trade name), etc. Desirably, the disintegration conditions are arbitrarily adjusted according to the machine to be used, and may be such that the particles are not broken but the agglomeration thereof is disintegrated.

In the foregoing production method, the particle size of the obtained porous spherical silica is substantially the same as the diameter of each of the droplets (W-phase) of the fumed silica-dispersed solution in the W/O emulsion prepared in the step of forming an emulsion. Therefore, the dispersion conditions may be set so that the diameter is in the target range. Various methods of controlling the diameters of droplets in a W/O emulsion are known, and any technique thereof may be appropriately selected and applied. A known method can be used for the method of adjusting the particle sizes of the droplets. Specific examples of such a method include a method of adjusting the amount of the addition of the surfactant, and a method of adjusting the shearing force applied in the emulsification by the rotation speed, the flow rate, etc. In the adjustment of the amount of the addition of the surfactant, the larger the amount of the used surfactant is, the finer the droplets tend to be; and the smaller the amount thereof is, the larger the droplets tend to be. In the adjustment using the shearing force, the stronger the applied shearing force is, the finer the droplets tend to be; and the weaker the applied shearing force is, the larger the droplets tend to be.

The pore volume can be controlled by drying shrinkage. Any known method can be used as the method of controlling drying shrinkage. A specific example of such a method is a method of adjusting the concentration of the aqueous solvent before the drying. The pore volume can also be controlled by the firing conditions. The higher the firing temperature is and the longer the firing time is, the smaller the pore volume tends to be. Using a fumed silica as the raw material as in the production method according to the present invention leads to the large modal pore diameter because the fumed silica has an aggregating structure. The specific surface area can be adjusted by appropriately selecting the specific surface area of the fumed silica used as the raw material, and can be also adjusted by the gelating time. The shorter the gelating time is, the larger the specific surface area tends to be. The specific surface area can also be adjusted by the firing conditions. In general, the higher the firing temperature is and the longer the firing time is, the smaller the specific surface area tends to be.

As described above, the alkali metal content can be easily lowered if a person skilled in the art takes enough care to avoid contamination (inclusion of impurities) to perform the production using a fumed silica containing substantially no alkali metal as a raw material and other raw materials containing substantially no alkali metal. When further reduction of the alkali metal content is aimed, the cake may be washed with water, an organic solvent, or the like after the solid-liquid separation before the drying.

[Examples]

Hereinafter examples for specifically describing the present invention will be shown. The present invention is not limited to these examples only.

<Evaluation Methods>

Evaluation concerning the following items was performed for every produced porous spherical silica.

(Measuring Particle Size Distribution and Volume-Based Cumulative Diameter with Coulter Counter)

To 40 mL of an ion-exchanged water, 0.1 g of the porous spherical silica was added and dispersed using an ultrasonic cleaner (BRANSONIC 1510J-DTH manufactured by BRANSON) for 30 minutes. The particle size distribution of the obtained dispersed solution was measured using Multisizer III manufactured by Beckman Coulter. For the measurement, an aperture having an aperture diameter of 100 $\mu$m was used. From the obtained particle size distribution, the volume-based 50%, 10%, and 90% cumulative diameters were evaluated.

(Measuring BET Specific Surface Area)

The BET specific surface area was measured with BELSORP-miniX (manufactured by BEL JAPAN, Inc.). The BET specific surface area was calculated by putting and drying a sample to be measured in a vacuum of at most 1 kPa at 200°C for at least 3 hours, and obtaining and analyzing, by a BET method (Stephen Brunauer, P. H. Emmett and Edward Teller, J. Am. Chem. Soc. 60, 309 (1938)), an adsorption isotherm in the adsorption of nitrogen only at the liquid-nitrogen temperature.

(Pore Volume and Pore Diameter Distribution)

The pore volume and the pore diameter distribution were measured according to the aforementioned definitions by the use of AutoPore V9620 (manufactured by Micromeritics).

(Alkali Metal Content)

To 1 g of the porous spherical silica, 10 mL of nitric acid and 10 mL of hydrofluoric acid were added to dissolve the silica, and the resultant solution was heated at 180°C for 4 hours to evaporate to dryness. After the resultant was cooled to room temperature, 2 mL of nitric acid and 18 mL of ultrapure water were added to obtain 20 mL of a sample to be measured in a volumetric flask. The alkali metal content of the obtained sample was measured using an inductively coupled plasma-optical emission spectrometer (ICAP 650DUO manufactured by Thermo Scientific).

(Circularity)

A SEM image of at least 2000 particles of the porous spherical silica that was observed with a SEM (S-5500 manufactured by Hitachi High-Tech Corporation, 3.0 kV in acceleration voltage, secondary electron detection) at the magnification of 1000 was subjected to image analysis, and the average circularity was calculated according to the aforementioned definition.

<Example 1>

(Step of Preparing Dispersed Solution)

To 200 mL of an ion-exchanged water where 6.65 g of urea was dissolved, 66 g of REOLOSIL QS-30 (manufactured by Tokuyama Corporation) was added while stirred using a homogenizer (T25BS1 manufactured by IKA) to predisperse a fumed silica. Next, fine dispersion was performed by dispersion for 2 minutes twice using an ultrasonic homogenizer (Sonifier SFX250 manufactured by BRANSON) with a 60% output to obtain a fumed silica-dispersed solution. The value of D50 of the obtained solution was 0.12 $\mu$m, and the value of D90 thereof was 0.16 $\mu$m. This step of preparing a dispersed solution was performed in a chiller that was cooled to 10°C. For the measurement of the particle size distribution of the obtained fumed silica-dispersed solution, LS 13 320 (manufactured by Beckman Coulter) was used. The refractive index of water which was used as a solvent in the measurement was set to 1.333, and the refractive index of the particle was set to 1.46. From the obtained particle size distribution, the volume-based 50% cumulative diameter (value of D50) and the volume-based 90% cumulative diameter (value of D90) were evaluated.

(Step of Preparing W/O Emulsion)

From the fumed silica-dispersed solution prepared by the foregoing method, 65.5 g of the solution was separated out. To the separated solution, 129 g of decane where 0.75 g of sorbitan monooleate (RHEODOL SP-O10V manufactured by Kao Corporation) was dispersed was added, and thereafter, stirred using a homogenizer at 8600 rotations/minute for 3 minutes whereby a W/O emulsion was obtained.

(Gelating Step)

The obtained W/O emulsion was kept in a water bath at 80°C for 3 hours while stirred at 300 rpm using four inclined-blades each having a blade diameter of 60 mm, a blade width of 20 mm, and an inclination of 45 degrees, thereby having gelated.

(Step of Collecting Gels)

To the resultant, 77 g of isopropyl alcohol and 52 g of water were added and stirred with stirring blades while kept at 70°C for 30 minutes. Thereafter, the resultant was allowed to stand, thereby separating into the two layers of an upper layer, which was an O-phase, and a lower layer, which was a W-phase.
Next, by decantation, the O-phase and the W-phase were separated, and the W-phase was collected.
The obtained gels were sorted out from the W-phase by a suction filter. The collected gels were dried with a vacuum dryer at 150°C for 12 hours, and thereafter fired for 1 hour at 800°C. The physical properties of the porous spherical silica that was obtained in this way are shown in table 1.

<Example 2>

A porous spherical silica was obtained by the same process as in example 1 except that, in example 1, the fine dispersion in the step of preparing a dispersed solution was performed using Nanomizer (NMS-200L D10 manufactured by NANOMIZER Inc.) under the condition of 125 MPa in processing pressure. The physical properties of the obtained porous spherical silica are shown in table 1. The value of D50 of the dispersed solution obtained in the step of preparing a dispersed solution was 0.10 $\mu$m, and the value of D90 thereof was 0.15 $\mu$m.

<Example 3>

A porous spherical silica was obtained by the same process as in example 1 except that, in example 1, the fine dispersion in the step of preparing a dispersed solution was performed using Altimizer (HJP-25005 manufactured by Sugino Machine Limited) under the condition of 150 MPa in processing pressure. The physical properties of the obtained porous spherical silica are shown in table 1. The value of D50 of the dispersed solution obtained in the step of preparing a dispersed solution was 0.09 $\mu$m, and the value of D90 thereof was 0.12 $\mu$m.

<Comparative Example 1>

A porous spherical silica was obtained by the same process as in example 1 except that, in example 1, in the fine dispersion conditions in the step of preparing a dispersed solution, the output was changed to a 20% output. The physical properties of the obtained porous spherical silica are shown in table 1. The value of D50 of the dispersed solution obtained in the step of preparing a dispersed solution was 0.20 $\mu$m, and the value of D90 thereof was 0.25 $\mu$m.

<Comparative Example 2>

A porous spherical silica was obtained by the same process as in example 1 except that, in example 1, in the fine dispersion conditions in the step of preparing a dispersed solution, the dispersion was changed to dispersion for 1 minute once. The physical properties of the obtained porous spherical silica are shown in table 1. The value of D50 of the dispersed solution obtained in the step of preparing a dispersed solution was 0.15 $\mu$m, and the value of D90 thereof was 0.30 $\mu$m.

<Comparative Example 3>

A porous spherical silica was obtained by spray-drying to granulate a fumed silica-dispersed solution prepared by the same process as in the step of preparing a dispersed solution in example 1, and thereafter, firing the resultant at 800°C for 1 hour. The physical properties of the obtained porous spherical silica are shown in table 1. The value of D50 of the dispersed solution obtained in the step of preparing a dispersed solution was 0.11 $\mu$m, and the value of D90 thereof was 0.14 $\mu$m.

Table 1

(Table 1)

| | Particle size (D50) [$\mu$m] | D10/D90 | Modal pore diameter [nm] | Pore volume [mL/g] | Pore volume proportion [%] | Pore volume ±5 nm* [mL/g] | Specific surface area [m$^2$/g] | Alkali metal content [ppm] | Average circularity |
|---|---|---|---|---|---|---|---|---|---|
| Example 1 | 10.5 | 0.44 | 19 | 1.2 | 70 | 0.84 | 253 | 22 | 0.83 |
| Example 2 | 10.2 | 0.52 | 14 | 1.4 | 49 | 0.68 | 225 | 15 | 0.88 |
| Example 3 | 9.8 | 0.55 | 18 | 15 | 55 | 0.83 | 232 | 30 | 0.85 |
| Comparative example 1 | 10.3 | 0.48 | 18 | 2.0 | 19 | 0.38 | 221 | 12 | 0.80 |
| Comparative example 2 | 9.7 | 0.44 | 22 | 1.7 | 18 | 0.30 | 238 | 16 | 0.85 |

(continued)

|  | Particle size (D50) [μm] | D10/D90 | Modal pore diameter [nm] | Pore volume [mL/g] | Pore volume proportion [%] | Pore volume ±5 nm* [mL/g] | Specific surface area [m²/g] | Alkali metal content [ppm] | Average circularity |
|---|---|---|---|---|---|---|---|---|---|
| Comparative example 3 | 10.0 | 0.26 | 24 | 1.6 | 22 | 0.35 | 254 | 17 | 0.82 |

*: volume of pores each having a pore diameter in the range of the modal pore diameter ±5 nm

<Evaluation Results>

(Examples 1 to 3)

As shown in table 1, in each of examples 1 to 3, the pore volume by a mercury penetration method was at least 0.5 mL/g, that is, the porous spherical silica had a large pore volume; and the modal pore diameter by a mercury penetration method was at least 5 nm, that is, the porous spherical silica had a large modal pore diameter, whereas the proportion of the volume of the pores each having a pore diameter in the range of the modal pore diameter by a mercury penetration method ±5 nm to the total pore volume (pore volume proportion) thereof was at least 40%, that is, the pore diameter distribution thereof was sharp. This can be realized by: adjusting the dispersion conditions so that the particle size distribution of the fumed silica-dispersed solution is within a predetermined range; and turning the solution into gels by the production method according to the present invention.

In examples 1 to 3, various devices were used for the fine dispersion for the fumed silica-dispersed solutions, and the operation conditions thereof also varied from one another. However, the obtained porous spherical silicas all had large modal pore diameters and large pore volumes, and had sharp pore diameter distributions. Like them, in the production method according to the present invention, the dispersing method for the fumed silica-dispersed solution is not limited, and as long as the particle size distribution of the dispersed-solution is within a predetermine range, the porous spherical silica having a sharp pore diameter distribution can be obtained.

(Comparative Example 1)

The fumed silica-dispersed solution prepared in comparative example 1 had a value of D50 of 0.20 μm, and a value of D90 of 0.25 μm, which were above the predetermined ranges; and the pore volume proportion of the obtained porous spherical silica was 19%, that is, the pore diameter distribution thereof was broad. This was caused by an insufficient dispersion force. Like this, when the dispersion state of the fumed silica-dispersed solution is not appropriate, it is difficult to obtain the porous spherical silica according to the present invention.

(Comparative Example 2)

The fumed silica-dispersed solution prepared in comparative example 2 had a value of D50 of 0.15 μm, which was in the predetermined range, but a value of D90 of 0.30 μm, which was above the predetermined range; and the pore volume proportion of the obtained porous spherical silica was 18%, that is, the pore diameter distribution thereof was broad. This was caused by an insufficient dispersion time. Like this, when the dispersion state of the fumed silica-dispersed solution is not appropriate, it is difficult to obtain the porous spherical silica according to the present invention.

(Comparative Example 3)

The fumed silica-dispersed solution prepared in comparative example 3 had values of D50 and D90 both within the predetermined ranges, but the pore volume proportion of the obtained porous spherical silica was 22%, that is, the pore diameter distribution thereof was broad. This was because the fumed silica-dispersed solution was granulated by spray-drying. Like this, unless the step of turning the fumed silica-dispersed solution into gels is taken even when the dispersion state of the dispersed solution is appropriate, the particle size distribution of the dispersed solution cannot be reflected on the structure of the pores, and it becomes difficult to obtain the porous spherical silica according to the present invention.

**Claims**

1. A porous spherical silica, wherein

   a pore volume by a mercury penetration method is 0.5 mL/g to 8 mL/g,
   a modal pore diameter by a mercury penetration method is 5 nm to 50 nm, and
   a proportion of a volume of pores each having a pore diameter in a range of the modal pore diameter $\pm 5$ nm to a total pore volume is at least 40%.

2. The porous spherical silica according to claim 1, wherein
   the volume of the pores each having a pore diameter in the range of the modal pore diameter by a mercury penetration method $\pm 5$ nm is at least 0.5 mL/g.

3. The porous spherical silica according to claim 1, wherein

   a volume based 50% cumulative diameter (D50) of the porous spherical silica measured by a Coulter counter method is in a range of 2 and 200 $\mu$m, and
   a ratio (D10/D90) of a volume based 10% cumulative diameter (D10) of the porous spherical silica measured by a Coulter counter method to a volume based 90% cumulative diameter (D90) of the porous spherical silica measured by a Coulter counter method is at least 0.3.

4. The porous spherical silica according to claim 1, wherein
   a specific surface area of the porous spherical silica by a BET method is 100 m$^2$/g to 400 m$^2$/g.

5. The porous spherical silica according to claim 1, wherein
   an alkali metal content is at most 50 ppm.

6. A catalyst carrier comprising:
   the porous spherical silica according to any one of claims 1 to 5.

7. A column filler comprising:
   the porous spherical silica according to any one of claims 1 to 5.

8. A cosmetic comprising:
   the porous spherical silica according to any one of claims 1 to 5.

9. A polish comprising:
   the porous spherical silica according to any one of claims 1 to 5.

10. A resin composition comprising:
    the porous spherical silica according to any one of claims 1 to 5.

11. An adsorbent comprising:
    the porous spherical silica according to any one of claims 1 to 5.

12. A method of producing the porous spherical silica according to claim 1, the method comprising:

    preparing a fumed silica-dispersed solution so that a value of D50 is at most 0.15 $\mu$m, and a value of D90 is at most 0.2 $\mu$m, the D50 and the D90 being in a particle size distribution of the fumed silica-dispersed solution;
    preparing a W/O emulsion comprising an aqueous phase where a fumed silica is dispersed, and an organic phase including a nonaqueous solvent as a major component;
    heating the emulsion and gelating the aqueous phase to obtain a gel-dispersed solution; and
    collecting, from the solution, and drying generated gels.

## INTERNATIONAL SEARCH REPORT

| International application No. |
| --- |
| **PCT/JP2024/031711** |

### A. CLASSIFICATION OF SUBJECT MATTER

*C01B 33/18*(2006.01)i
FI:   C01B33/18 Z; C01B33/18 E

According to International Patent Classification (IPC) or to both national classification and IPC

### B. FIELDS SEARCHED

Minimum documentation searched (classification system followed by classification symbols)

C01B33/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2-22120 A (MITSUBISHI KASEI CORP.) 25 January 1990 (1990-01-25) examples, p. 5, lower right column, lines 11-13, fig. 2-4 | 1, 2, 4-7, 10, 11 |
| Y | | 3, 8, 9 |
| A | | 12 |
| X | JP 2007-76941 A (TOSOH CORP.) 29 March 2007 (2007-03-29) paragraphs [0011], [0018], [0032]-[0038], fig. 1 | 1, 2, 4-8, 11 |
| Y | | 3, 9, 10 |
| A | | 12 |
| Y | WO 2019/131873 A1 (JGC CATALYSTS & CHEMICALS LTD.) 04 July 2019 (2019-07-04) claims | 3, 8-10 |
| Y | WO 2022/154014 A1 (TOKUYAMA CORPORATION) 21 July 2022 (2022-07-21) claims, paragraph [0014] | 3, 8-10 |
| A | | 12 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 November 2024** | **26 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
**Information on patent family members**

International application No.

**PCT/JP2024/031711**

| Patent document cited in search report | | | Publication date (day/month/year) | Patent family member(s) | | | Publication date (day/month/year) |
|---|---|---|---|---|---|---|---|
| JP | 2-22120 | A | 25 January 1990 | (Family: none) | | | |
| JP | 2007-76941 | A | 29 March 2007 | (Family: none) | | | |
| WO | 2019/131873 | A1 | 04 July 2019 | US | 2021/0094835 | A1 | |
| | | | | claims | | | |
| | | | | KR | 10-2020-0102445 | A | |
| | | | | CN | 111527047 | A | |
| | | | | TW | 201934484 | A | |
| WO | 2022/154014 | A1 | 21 July 2022 | US | 2024/0067529 | A1 | |
| | | | | claims | | | |
| | | | | EP | 4279455 | A1 | |
| | | | | CN | 116406344 | A | |
| | | | | KR | 10-2023-0128444 | A | |
| | | | | TW | 202233158 | A | |

Form PCT/ISA/210 (patent family annex) (July 2022)

**REFERENCES CITED IN THE DESCRIPTION**

**Patent documents cited in the description**

- JP 2007076941 A
- JP 2008120633 A
- JP 2010138021 A
- WO 2022154014 A1

**Non-patent literature cited in the description**

- **STEPHEN BRUNAUER** ; **P. H. EMMETT** ; **EDWARD TELLER**. *J. Am. Chem. Soc.*, 1938, vol. 60, 309